# EUROPÄISCHE PATENTANMELDUNG

(11) **EP 4 279 285 A1**
(43) Veröffentlichungstag der Anmeldung: **22.11.2023**
(21) Anmeldenummer: 22173740.6
(22) Anmeldetag: 17.05.2022
(51) Int. Cl.: B41M 5/00, B41M 5/025, C09D 11/322, C09D 11/40, B44C 5/04

(54) **VERFAHREN UND VORRICHTUNG ZUM BEDRUCKEN EINES GEGENSTANDES**

(71) Anmelder: SWISS KRONO Tec AG, 6004 Luzern (CH)
(72) Erfinder: Oldorff, Frank, 19057 Schwerin (DE); Dicke, Sebastian, 16868 Bantikow (DE)
(74) Vertreter: Gramm, Lins & Partner Patent- und Rechtsanwälte PartGmbB

(57) **Zusammenfassung**

Die Erfindung betrifft ein Verfahren zum Bedrucken eines Gegenstandes, der kein Papier ist, mittels einer Digitaldruckanlage, wobei die Digitaldruckanlage eine Singlepass-Digitaldruckanlage mit mehreren Farbauftragswerken zum Aufbringen von Drucktinten unterschiedlicher Farben ist, wobei bei dem Verfahren ein Farbträgerelement in einer Vorschubrichtung an den Farbauftragswerken vorbeigeführt wird, dadurch gekennzeichnet, dass wenigstens vier unterschiedliche Farben verwendet werden, die die Farben gelb, rot, blau und schwarz beinhalten, wobei die Drucktinten einen Wasseranteil zwischen 55 % und 65 % aufweisen und in einer Menge von höchstens 7,5 g/m2 aufgetragen werden.

## Beschreibung

Die Erfindung betrifft ein Verfahren zum Bedrucken eines Gegenstandes, der kein Papier ist, mittels einer Digitaldruckanlage, wobei die Digitaldruckanlage eine Singlepass-Digitaldruckanlage mit mehreren Farbauftragswerken zum Aufbringen von Drucktinte unterschiedlicher Farben ist, wobei bei dem Verfahren ein Farbträgerelement in einer Vorschubrichtung an den Farbauftragswerken vorbeigeführt wird. Die Erfindung betrifft zudem eine Vorrichtung zum Durchführen eines derartigen Verfahrens.

Das Bedrucken von Gegenständen, die kein Papier sind, ist seit vielen Jahren aus dem Stand der Technik bekannt. Bei der Herstellung von Laminatpaneelen, beispielsweise zur Herstellung von Fußbodenpaneelen oder Wand- und Deckenverkleidungen, aber auch als Möbelplatten, werden die Oberseiten, die in der späteren Verwendung sichtbar sein werden, mit einem Dekor versehen. Dieses kann auf ein Dekorpapier aufgedruckt werden, das danach mit dem Kern, also der eigentlichen Platte, beispielsweise einer Holzwerkstoffplatte, verbunden werden muss. Alternativ dazu kann der Gegenstand, beispielsweise das Laminatpaneel oder ein Teil davon, beispielsweise der Kern des Laminatpaneels, mit der Drucktinte bedruckt werden. Im Stand der Technik ist bekannt, die Drucktinte direkt auf den Gegenstand aufzubringen, wobei beispielsweise der Walzendruck verwendet wird. Es hat sich herausgestellt, dass der direkte Druck auf eine Holzwerkstoffplatte mit den insbesondere in diesem Anwendungsbereich geforderten hohen Anforderungen an die Qualität des Druckes und die Reproduzierbarkeit nur schwer und in vielen Fällen gar nicht zu vereinbaren ist. Im Falle des direkten Druckes ist das Farbträger der Gegenstand.

Daher wird in diesem Fall oftmals der indirekte Druck verwendet. Das Farbträgerelement, auf das die Drucktinte aufgetragen wird, ist in diesem Fall beispielsweise ein Druckzylinder, von dem die Drucktinte, die über die Farbauftragswerke auf den Druckzylinder aufgebracht wird, auf eine Auftragswalze aufgebracht wird, die den eigentlich zu bedruckenden Gegenstand bedruckt. Alternativ dazu kann auch ein Druckband verwendet werden. Dieses Druckband wird über wenigstens zwei Walzen, beispielsweise eine Druckwalze, die auch Druckzylinder genannt werden kann, und eine Förderwalze, die auch Auftragswalze genannt werden kann, gespannt und in Bewegung versetzt. Die Farbauftragswerke drucken die Drucktinte auf das Druckband, das in diesem Fall des Farbträgerelement bildet. Von dort wird es auf den eigentlich zu bedruckenden Gegenstand übertragen.

Digitaldruckanlagen, mit denen Farbträgerelemente bedruckt werden können, sind ebenfalls seit langer Zeit bekannt. Singlepass-Digitaldruckanlagen, bei denen das zu bedruckende Farbträgerelement die Druckanlage nur einmal durchlaufen muss, werden beispielsweise in der Verpackungsindustrie verwendet, um Verpackungsmaterialien, beispielsweise Kartons, zu bedrucken. Die Anforderungen an den Druck und die Qualität des zu erzeugten Dekors sind in diesem Fall jedoch deutlich geringer als bei der Herstellung der oben genannten Dekorpapiere beispielsweise für die oben genannten Zwecke. Dies gilt sowohl für die Qualität des einzelnen Drucks des Dekors als auch für die Reproduzierbarkeit der Dekore, die oft in großer Anzahl hergestellt werden müssen. Hinzu kommt, dass Gegenstände mit dem gleichen Dekor oft in großem zeitlichem Abstand in unterschiedlichen Chargen hergestellt werden, wodurch an die Reproduzierbarkeit nochmals erhöhte Anforderungen gestellt werden.

Es ist aus dem Stand der Technik bekannt, dass verschiedene Parameter die Qualität des hergestellten Dekors beeinflussen. Dies betrifft beispielsweise das verwendete Farbträgerelement und den zu bedruckenden Gegenstand, die Menge und Art der aufgetragenen Drucktinte, die Menge und Art eines gegebenenfalls verwendeten Primers, der auch als Grundierung bezeichnet werden kann, aber auch Umwelteinflüsse wie Luftfeuchtigkeit und Temperatur. Diese Parameter, die in der Regel nicht unabhängig voneinander optimiert werden können, sondern sich gegenseitig beeinflussen, haben jedoch nicht nur einen Einfluss auf das zu bedruckende Farbträgerelement und gegebenenfalls den zu bedruckenden Gegenstand, sondern auch auf die zum Druck verwendete Digitaldruckanlage.

Bei der Auswahl der verwendeten Tinte und der darin enthaltenen Pigmente muss darauf geachtet werden, dass die gesamte Dekorvielfalt, die hergestellt werden soll, mit dem Farbpigmentsatz abgebildet werden kann. Daher ist ein möglichst umfangreicher Farbpigmentsatz mit möglichst vielen unterschiedlichen Farben scheinbar von Vorteil. Andererseits werden dadurch die Kosten erhöht und die Digitaldruckanlage konstruktiv aufwendig, dafür jede der unterschiedlichen Farben ein eigenes Farbauftragswerk vorhanden sein muss.

Der Erfindung liegt daher die Aufgabe zugrunde, ein Verfahren zum Bedrucken des Gegenstandes, der kein Papier ist, so zu verbessern, dass ein qualitativ hochwertiges Dekor erzeugt werden kann, das besonders bevorzugt reproduzierbar ist.

In einer Ausgestaltung der vorliegenden Erfindung werden wenigstens vier unterschiedliche Farben verwendet. Alternativ oder zusätzlich dazu weisen die verwendeten Drucktinten einen Wasseranteil zwischen 55 % und 65 % auf. Alternativ oder zusätzlich dazu werden die Drucktinten in einer Menge von höchstens 7,5 g/m² aufgetragen. Jedes dieser Merkmale und jede Kombination dieser Merkmale bildet in Kombination mit einem Verfahren zum Bedrucken eines Gegenstandes, der kein Papier ist, mittels einer Digitaldruckanlage, wobei die Digitaldruckanlage eines Singlepass-Digitaldruckanlage mit mehreren Farbauftragswerken zum Aufbringen von Drucktinten unterschiedlicher Farben ist, wobei bei dem Verfahren ein Farbträgerelement in einer Vorschubrichtung an den Farbauftragswerken vorbeigeführt wird, eine eigenständige Erfindung.

Das zu bedruckende Farbträgerelement wird folglich innerhalb der Digitaldruckanlage an den verschiedenen Farbauftragswerken vorbeigeführt. Dabei wird die durch das jeweilige Farbauftragswerk aufzubringende Drucktinte auf das Farbträgerelement aufgebracht. Nachdem das Farbträgerelement an allen vorhandenen Farbauftragswerken vorbeigeführt wurde, ist das Farbträgerelement folglich mit dem gewünschten Dekor bedruckt. Beim indirekten Druck wird dieses Dekor dann auf den zu bedruckenden Gegenstand übertragen, in dem das Farbträgerelement auf diesem Gegenstand abgerollt wird. In diesem Fall wird, wie bereits dargelegt, die Drucktinte von den Farbauftragswerken auf das Farbträgerelement und von diesem direkt oder indirekt auf den Gegenstand übertragen. Das Farbträgerelement rotiert folglich innerhalb der Digitaldruckanlage und wird mehrfach an den Farbauftragswerken vorbeigeführt. Dennoch handelt es sich um eine Singlepass-Anlage, da in einem einzigen Durchlauf sämtliche Farben, die für den Druck verwendet werden, auf das Farbträgerelement aufgebracht werden. Beim direkten Druck ist das Farbträgerelement der Gegenstand.

Vorzugsweise beinhalten die wenigstens vier Farben die Farben gelb, rot, blau und schwarz. Diese Farben werden bevorzugt auch dann verwendet, wenn genau vier unterschiedliche Farben verwendet werden. In anderen Ausgestaltungen wird statt blau die Farbe cyan verwendet. Vorzugsweise wird für die gelbe Farbe das Pigment PY150, optional in Kombination mit PY181 verwendet. Vorzugsweise wird für die rote Farbe das Pigment PR254 optional in Kombination mit PY181 und/oder PR207 verwendet. Vorzugsweise wird als Pigment für die blaue Farbe PC15:3 und/oder PC 15:4 verwendet. Vorzugsweise wird als Pigment für die schwarze Farbe PBI 7 und/oder Carbon Black verwendet. In einigen Ausgestaltungen wird eine fünfte Farbe verwendet. Vorzugsweise handelt sich dabei um die Farbe Orange. Für diese Farbe wird bevorzugt das Pigment PY181 verwendet. Alternativ dazu wird eine Kombination der Pigmente PY181 und PR207 verwendet.

Vorzugsweise werden vier Farben verwendet, wenn der zu bedruckende Gegenstand sehr hell ist, beispielsweise ein weißer Gegenstand bedruckt wird. Dieser hat vorzugsweise einen L-Wert von beispielsweise 88, wobei L die Helligkeit einer Farbe mit Werten zwischen 0 und 100 im sogenannten Lab-Farbraum, der dem Fachmann bekannt ist, beschreibt. Die Verwendung einer fünften Farbe ist beispielsweise dann sinnvoll, wenn der zu bedruckende Gegenstand einen geringeren L-Wert, also eine geringere Helligkeit aufweist. Dies ist beispielsweise der Fall bei einer vorgeweißten HDF-Platte, die bedruckt werden soll.

Vorzugsweise weisen die verwendeten Drucktinten einen Lösemittelanteil von wenigstens 27 %, vorzugsweise wenigstens 30 % auf. Vorzugsweise weisen die Drucktinten einen Lösemittelanteil von höchstens 37 %, besonders vorzugsweise von höchstens 32 % auf. Weiter bevorzugt beträgt der Lösemittelanteil der Drucktinten 32 %. Vorzugsweise weisen die verwendeten Drucktinten einen Wasseranteil von wenigstens 57 % auf. Vorzugsweise beträgt der Wasseranteil der verwendeten Drucktinten höchstens 62 %. Besonders bevorzugt beträgt der Wasseranteil der verwendeten Drucktinten 60 %.

In einer vorteilhaften Ausgestaltung beinhalten die verwendeten Drucktinten einen Pigmentanteil von wenigstens 0,5 % und höchstens 1,5 %. Besonders bevorzugt beträgt der Pigmentanteil 1 %. Bei einem größeren Pigmentanteil steigt gleichzeitig auch der Feststoffanteil, da die Pigmente in der Regel als Feststoffe vorliegen. Soll der bedruckte Gegenstand durchimprägniert werden, ist ein zu hoher Feststoffanteil von Nachteil.

Vorzugsweise wird vor dem Aufbringen der Drucktinten einen Primer als Grundierung auf den zu bedruckenden Gegenstand aufgetragen. Vorzugsweise handelt es sich um einen aktiven Primer. Diese halten die in der Drucktinte enthaltenen Pigmente nach dem Aufdrucken auf den Gegenstand in einer möglichst dünnen Schicht an der Oberseite des bedruckten Gegenstandes fest und verhindern so, dass die Pigmente weit in den Gegenstand absacken. Dadurch wird auch bei relativ geringer Auftragsmenge der Drucktinte ein intensiver frischer Farbeindruck erreicht. Durch einen aktiven Primer lässt sich die verwendete Tintenmenge reduzieren, wodurch auch die Produktionskosten reduziert werden. Der Primer wird in der Regel verwendet, um den zu bedruckenden Gegenstand zu imprägnieren und so zu verhindern, dass aufgedruckte Drucktinten und insbesondere die darin enthaltenen Pigmente tief in den zu bedruckenden Gegenstand absacken und eindringen. Je tiefer die Pigmente in den Gegenstand eindringen, desto schwächer ist der Farbeindruck, den die Drucktinte hinterlässt. Dies kann durch einen erhöhten Tintenverbrauch, also eine größere Auftragsmenge der Drucktinte ausgeglichen werden, wodurch jedoch die Produktionskosten erhöht werden. Hinzukommt, dass dadurch auch die in der Digitaldruckanlage verwendete Flüssigkeitsmenge steigt, was zu weiteren Nachteilen führen kann.

Vorzugsweise wird der Primer in einer Menge von mindestens 4 g/m², bevorzugt mindestens 4,5 g/m² aufgetragen. Wird eine geringere Menge verwendet, kann dies dazu führen, dass der zu bedruckende Gegenstand nicht ausreichend imprägniert wird. Vorzugsweise wird der Primer in einer Menge von höchstens 6 g/m², bevorzugt höchstens 5,5 g/m² aufgetragen. Besonders bevorzugt beträgt die Auftragsmenge des Primers 5 g/m².

Alternativ kann auch ein nicht aktiver Primer verwendet werden, der beispielswiese in einer Menge von 8 g/m2 bis 20 g/m2 aufgetragen wird. Dadurch erhöhen sich allerdings der Materialeinsatz und die Herstellungskosten.

Vorzugsweise verfügt die Digitaldruckanlage über ein Primerauftragswerk, mittels dessen der Primer auf den Gegenstand aufgebracht wird. Vorzugsweise befindet sich das Primerauftragswerk vor den Farbauftragswerken, sodass der Gegenstand beim Durchlaufen der Digitaldruckanlage zunächst am Primerauftragswerk vorbeigeführt und dort mit dem Primer bedruckt wird, bevor er an den Farbauftragswerken vorbeigeführt wird, wo es mit der jeweiligen Drucktinte bedruckt wird. In einer bevorzugten Ausgestaltung befindet sich zwischen dem Primerauftragswerk und den Farbauftragswerken wenigstens ein Trockner, durch den der aufgebrachte Primer getrocknet wird. Vorzugsweise wird der Primer und der damit bedruckte Gegenstand auf einen vorbestimmten Feuchtigkeitswert getrocknet.

Vorzugsweise verfügt das Primerauftragswerk über ein Druckkammerrakel und eine Keramikwalze, die vorzugsweise eine indirekte Auftragsgummiwalze aufweist. Besonders bevorzugt verfügt das Primerauftragswerk über eine Keramikrasterwalze mit 80er Raster.

In anderen Ausgestaltungen wird kein Primer aufgetragen. Vorzugsweise verfügt die Digitaldruckanlage dann auch nicht über ein Primerauftragswerk.

Vorzugsweise sind die Farbauftragswerke eingerichtet und geeignet, den Gegenstand auf einer Breite von wenigstens 2050 mm zu bedrucken. Die Drucklänge beträgt beispielsweise zwischen 1860 mm und 2800 mm. Vorzugsweise wird der Gegenstand oder das Farbträgerelement mit einer Geschwindigkeit von wenigstens 40 m/min, vorzugsweise von wenigstens 80 m/min an den Farbauftragswerken vorbeigeführt. Besonders bevorzugt wird der Gegenstand oder das Farbträgerelement mit einer Geschwindigkeit von höchstens 90 m/min, vorzugsweise von höchstens 85 m/min, an den Farbauftragswerken vorbeigeführt. Für die Qualität des hergestellten und gedruckten Dekores ist eine möglichst hohe Auflösung von Vorteil. Vorzugsweise verfügt daher wenigstens eines der Farbauftragswerke, besonders bevorzugt jedoch alle Farbauftragswerke über wenigstens zwei Druckkopfreihen. Diese sind in Vorschubrichtung hintereinander angeordnet. Vorzugsweise wird der Gegenstand mit einer Auflösung von wenigstens 1200 dpi (dot per inch "Punkte pro Zoll) in Vorschubrichtung, also in Längsrichtung, bedruckt. Besonders bevorzugt wird der Gegenstand mit einer Auflösung von wenigstens 1200 dpi in Querrichtung, also senkrecht zur Vorschubrichtung, bedruckt. Bevorzugt ist diese Auflösung unabhängig von der Vorschubgeschwindigkeit, mit der der Gegenstand innerhalb der Digitaldruckanlage bewegt wird.

Vorzugsweise hängt die "Waveform", mit der die Form der am Druckkopf gebildeten Tintentropfen beeinflusst wird, von der Wahl der verwendeten Tinten und den verwendeten Druckköpfen ab.

Vorzugsweise verfügt die Digitaldruckanlage über eine automatische Steuerung, mit der die zu bedruckenden Gegenstände gehandhabt werden. Diese beinhaltet vorzugsweise eine Beschickungseinrichtung, eine Einrichtung zur Abstandskontrolle zwischen aufeinander folgenden Gegenstände, die nacheinander bedruckt werden sollen, eine Heizeinrichtung zum Erwärmen der Gegenstände, eine Beschichtungseinrichtung zum Beschichten der Gegenstände beispielsweise mit Grundharz und Weiss, eine Trocknung, eine Zufuhreinrichtung zum eigentlichen Druckbereich der Anlage, eine Kühleinrichtung zum Abkühlen der Gegenstände, eine Versiegelungseinrichtung und/oder eine Abstapelung.

Vorteilhafterweise wird der bedruckte Gegenstand nach dem Bedrucken einer Kontrolleinrichtung zugeführt. Besonders bevorzugt durchläuft er diese Kontrolleinrichtung. In der Kontrolleinrichtung werden Daten des Gegenstands mittels einer Erfassungseinheit erfasst. Diese Erfassungseinheit eine ist vorzugsweise ein Sensor, besonders bevorzugt ein optischer Sensor, beispielsweise eine Kamera, mit der das hergestellte Dekor oder Teile davon erfasst werden. Die Erfassungseinheit sendet dann Signale an eine elektrische Steuerung, die vorzugsweise Teil der Digitaldruckanlage ist. Die elektrische Steuerung, die vorzugsweise in Form einer elektronischen Datenverarbeitungseinrichtung mit einem Mikroprozessor ausgebildet ist, ist eingerichtet, Fehler zu erkennen. Dazu ist es von Vorteil, wenn die elektrische Steuerung auf einen elektronischen Datenspeicher zugreifen kann, in dem SollWerte abgelegt sind, mit denen die von der Erfassungseinheit erfassten Werte verglichen werden.

Vorzugsweise ist das Farbträgerelement einen Übertragungselement, beispielsweise eine Übertragungswalze oder ein Übertragungsband.

Die Erfindung löst die gestellte Aufgabe zudem durch eine Vorrichtung, insbesondere eine Digitaldruckanlage, zum Durchführen eines der hier beschriebenen Verfahren.

In einem konkreten Ausführungsbeispiel werden bei einem Hersteller für Laminatfußbodendielen auf einer Singlepass-Digitaldruckanlage Trägerplatten aus einem Holzwerkstoff bedruckt. Diese werden mit Arbeitsbreite 2070 mm und einer Drucklänge von 2800 mm bedruckt. Dabei wird beispielsweise eine "Fuji Samba" Druckkopfdoppelreihe verwendet, die eine Auflösung von 1200 dpi x 1200 dpi ermöglicht. Die Druckköpfe verfügen über einen Tintenumlauf, durch den erreicht wird, dass Tinte nicht zu lange vor dem Druckkopf ansteht, wenn die jeweilige Farbe für einen längeren Zeitraum nicht verwendet wird. Da die Tinte immer in Bewegung ist, werden Verstopfungen wirksam vermieden. Derartige Tintenumläufe sind bei allen hier beschriebenen Ausführungsformen vorteilhaft. Die Geschwindigkeit, mit der das Papier durch die Digitaldruckanlage geführt wird, beträgt beispielsweise 80 m/min. Die Auflösung des Druckers beträgt dann 1200 dpi x1200 dpi. Die zu bedruckenden HDF-Trägerplatten weisen eine Dicke von 6 mm bis 12 mm auf. Das Tintensystem weist vier unterschiedliche Farben, gelb, rot, blau und schwarz (cyan, red, yellow, black; CRYK) auf, wobei wasserbasierte Tinten von der Firma Staedtler verwendet und mit einer durchschnittlichen Auftragsmenge von 4g/m2 aufgebracht werden. Es erfolgt kein Primerauftrag.

Die zu bedruckenden Trägerplatten werden angeschliffen, erwärmt, mit Melaminharz vorgrundiert und getrocknet. Anschließend werden sie dreifach mit Weiß grundiert und getrocknet, so dass eine homogene Weißfläche mit L= a.90 entsteht. Das Tintensystem lässt durch moderate Auftragsmengen eine konkurrenzfähige Kostensituation zu. Die vier eingesetzten Drucktinten beinhalten als Pigmente PY150 für gelb, PR254 für rot, PC15:3 für blau und PBI 7 für schwarz. Durch den Einsatz dieser Pigmentkombination können nahezu alle Kollektionsdekore farblich wunschgerecht umgesetzt werden. Die eingesetzten Materialien und deren Auftragsmengen lassen weiterhin eine gute Weiterverarbeitung, beispielsweise eine Imprägnierung oder Imprägnathaftung auf der HDF-Platte zu, wodurch eine hohe Qualität des Endproduktes entsteht mit weniger als 1% Ausschuss und Reklamationen. Die geringe Anzahl von nur vier Drucktinten ermöglicht einen geringen Einkaufspreis und weniger Stillstände durch weniger mögliche Fehlerquellen.

Aufgrund der hohen Dekorvielfalt, der geringen Verbräuche der Drucktinten und Primer, des geringen Ausschuss- und Reklamationsanteils und der günstig in großen Mengen gekauften Produktionsflüssigkeiten entsteht ein sehr konkurrenzfähiges Laminat, welches günstig am Markt angeboten werden kann.

## Patentansprüche

1. Verfahren zum Bedrucken eines Gegenstandes, der kein Papier ist, mittels einer Digitaldruckanlage, wobei die Digitaldruckanlage eine Singlepass-Digitaldruckanlage mit mehreren Farbauftragswerken zum Aufbringen von Drucktinten unterschiedlicher Farben ist, wobei bei dem Verfahren ein Farbträgerelement in einer Vorschubrichtung an den Farbauftragswerken vorbeigeführt wird, **dadurch gekennzeichnet, dass** wenigstens vier unterschiedliche Farben verwendet werden, die die Farben gelb, rot, blau und schwarz beinhalten, wobei die Drucktinten einen Wasseranteil zwischen 55 % und 65 % aufweisen und in einer Menge von höchstens 7,5 g/m² aufgetragen werden.

2. Verfahren nach einem der vorstehenden Ansprüche, **dadurch gekennzeichnet, dass** die Drucktinten einen Lösemittelanteil zwischen 27 % bis 37 % aufweisen.

3. Verfahren nach einem der vorstehenden Ansprüche, **dadurch gekennzeichnet, dass** die Drucktinten einen Pigmentanteil von 0,5 % bis 1,5 %, vorzugswiese 1 % aufweisen.

4. Verfahren nach einem der vorstehenden Ansprüche, **dadurch gekennzeichnet dass** vor dem Aufbringen der Drucktinten ein Primer als Grundierung auf den Gegenstand aufgetragen wird.

5. Verfahren nach Anspruch 4, **dadurch gekennzeichnet, dass** der Primer in einer Menge von wenigstens 4 g/m² und höchstens 6 g/m², bevorzugt in einer Menge von 5 g/m² aufgetragen wird.

6. Verfahren nach Anspruch 4 oder 5, **dadurch gekennzeichnet, dass** die Digitaldruckanlage ein Primerauftragswerk aufweist, mittels dessen der Primer auf den Gegenstand oder auf ein Primerträgerelement aufgebracht wird.

7. Verfahren nach einem der vorstehenden Ansprüche, **dadurch gekennzeichnet, dass** die Farbauftragswerke eingerichtet und geeignet sind, den Gegenstand oder das Farbträgerelement auf einer Breite von wenigstens 2050 mm zu bedrucken.

8. Verfahren nach einem der vorstehenden Ansprüche, **dadurch gekennzeichnet, dass** wenigstens eines der Farbauftragswerke, vorzugsweise alle Farbauftragswerke wenigstens zwei Druckköpfe aufweisen

9. Verfahren nach einem der vorstehenden Ansprüche, **dadurch gekennzeichnet, dass** das Farbträgerelement mit einer Geschwindigkeit von wenigstens 40 m/min, vorzugsweise von wenigstens 80 m/min an den Farbauftragswerken vorbeigeführt wird.

10. Verfahren nach einem der vorstehenden Ansprüche, **dadurch gekennzeichnet, dass** das Farbträgerelement mit einer Geschwindigkeit von höchstens 90 m/min, vorzugsweise von höchstens 85 m/min an den Farbauftragswerken vorbeigeführt wird

11. Verfahren nach einem der vorstehenden Ansprüche, **dadurch gekennzeichnet, dass** die Drucktinten mit einer Auflösung von wenigstens 1200 dpi in der Druckbreite und einer Auflösung von wenigstens 1200 dpi in Drucklänge aufgebracht werden.

12. Verfahren nach einem der vorstehenden Ansprüche, **dadurch gekennzeichnet, dass** der bedruckte Gegenstand nach dem Bedrucken eine Kontrolleinrichtung durchläuft, in der Daten des Gegenstandes mittels einer Erfassungseinheit erfasst werden, die in einer elektrischen Steuerung verarbeitet werden, die eingerichtet ist, Fehler zu erkennen.

13. Verfahren nach einem der vorstehenden Ansprüche, **dadurch gekennzeichnet, dass** das Farbträgerelement der zu bedruckende Gegenstand ist.

14. Verfahren nach einem der vorstehenden Ansprüche 1 bis 11, **dadurch gekennzeichnet, dass** das Farbträgerelement ein Übertragungselement, beispielsweise eine Übertragungswalze oder ein Übertragungsband ist.

15. Vorrichtung zum Durchführen eines Verfahrens nach einem der vorstehenden Ansprüche.
